# EUROPEAN PATENT APPLICATION

(11) **EP 4 541 496 A1**
(43) Date of publication of application: **23.04.2025**
(21) Application number: 23020475.2
(22) Date of filing: 17.10.2023
(51) Int. Cl.: B23K 9/04, B33Y 10/00, B33Y 80/00, B22F 5/10, B22F 7/06, B22F 7/08, B22F 10/28, F17C 1/00, B23K 101/12, B23K 103/04

(54) **A METHOD FOR MANUFACTURING A NOZZLE UNIT FOR A PRESSURE VESSEL**

(71) Applicant: Linde GmbH, 82049 Pullach (DE)
(72) Inventor: Aumann, Martin, 82049 Pullach (DE); Hölzl, Reinhold, 82049 Pullach (DE); Englert, Thomas, 82049 Pullach (DE)
(74) Representative: Lu, Jing

(57) **Abstract**

The present invention relates to a method for manufacturing a nozzle unit (200) for a pressure vessel (100), especially for a pressure vessel of a pressure swing adsorption device, comprising the step of: manufacturing the nozzle unit (200) by means of an additive manufacturing process.

## Description

The present invention relates a method for manufacturing a nozzle unit for a pressure vessel, to a nozzle unit for a pressure vessel as well as to a method for manufacturing a pressure vessel and to a pressure vessel.

### Background of the invention

Pressure vessels can be used in a multitude of different process engineering devices, such as in apparatuses or plants for carrying out substance changes and/or substance conversions with the aid of purpose-directed physical and/or chemical and/or biological and/or nuclear sequences of action. For example, pressure vessels can be used in process engineering devices like an air separation plants or plants for separating mixtures of substances.

For example, pressure vessels can be used in a pressure swing adsorption device for separating a target component from a mixture of substances using pressure swing adsorption (PSA). In pressure swing adsorption, separation is achieved based on the different adsorption forces of the components to be separated using a cyclic pressure change. Substances that adsorb well to an adsorbent are retained thereon in a step or phase wherein the substance mixture to be separated is passed over the adsorbent at a high pressure ("adsorption phase"). In a subsequent step or phase, these substances are removed from the adsorbent essentially by a pressure relief ("desorption phase").

Pressure vessels of that kind can comprise a vessel body and nozzles welded to openings in the surface of the vessel body. These nozzles can e.g. be provided for allowing a fluid to enter and/or exit the vessel body, for connecting the pressure vessel with another device, for attaching instruments like gauges, etc. Nozzles of that kind are commonly forged or manufactured from a forged material and oftentimes need machining, which might lead to long delivery times. It is therefore desirable to provide an improved nozzle for a pressure vessel.

### Disclosure of the invention

The present invention relates to a method for manufacturing a nozzle unit for a pressure vessel, to a nozzle unit for a pressure vessel, to a method for manufacturing a pressure vessel, and to a pressure vessel with the features of the independent claims. Embodiments and advantages form the subject-matter of the dependent claims and of the subsequent description.

According to the present invention, the nozzle unit is manufactured by means of an additive manufacturing process. Additive manufacturing, often also referred to as "3D printing", is a manufacturing process in which a three-dimensional object is created layer by layer by consecutively adding a material. In this process, a new layer of material is successively applied to the previously created object, solidified and firmly bonded to the underlying layers, e.g. with the aid of a laser, electron beam or electric arc. After one layer has been created, the next layer can be created in an analogous manner.

By means of the additive manufacturing process, the nozzle unit can be manufactured as an integral, one-piece part. The additive manufacturing process partially allows an easy, cost effective and time effective manufacturing of the nozzle unit as a large steel part. It is expediently no longer necessary to forge the nozzle unit or to manufacture the nozzle from a forged material. Further, machining of the already additively manufactured nozzle unit is particularly not necessary. Particularly, effort and manufacturing time as well as a delivery time can be reduced. Properties of the nozzle unit, e.g. geometric properties like form, topology, radii, wall thickness etc., or chemical properties like a composition of the manufacturing material, can easily and individually be adjusted by means of the additive manufacturing process, e.g. depending on properties of the specific pressure vessel, for which the nozzle unit is created. The nozzle unit can expediently be manufactured to meet specific requirements e.g. regarding fatigue, corrosion or temperature. The additive manufacturing process further allows to manufacture an individually designed, custom-made nozzle unit, also in small quantities or even as a single-item production. The nozzle unit can individually and specifically be manufactured for a multitude of different pressure vessels, expediently for pressure vessels of a pressure swing adsorption device.

The present invention further relates to a method for manufacturing a pressure vessel, especially a pressure vessel for a pressure swing adsorption device. In the course of this manufacturing process, a vessel body is provided. A nozzle unit is additively manufactured onto the vessel body according to an embodiment of a method of the present invention. The correspondingly manufactured nozzle unit is connected to the vessel body, e.g. by welding. Alternatively or additionally, a nozzle unit is additively manufactured according to an embodiment of a method of the present invention and connected to the vessel body, e.g. by welding.

The present invention further relates to a nozzle unit and to a pressure vessel manufactured according to an embodiment of a method of the present invention. Advantages and embodiments of the methods according to the invention, of the nozzle unit according to the invention, and of the pressure vessel according to the invention shall arise from the present description in an analogous manner.

The vessel body expediently comprises a shell and at least one head. The shell is particularly the primary component of the pressure vessel configured for creating and maintaining a corresponding pressure. The shell can e.g. be made of different plates welded together to form a corresponding structure, e.g. with a cylindrical, spherical or conical shape. The head or heads are particularly provided for closing the shell at a corresponding end section. A head of that kind can expediently be curved. The shell or the head can be provided with a corresponding opening to which the nozzle is welded or onto which the nozzle is additively manufactured. The corresponding nozzle can e.g. be provided for allowing a fluid to enter and/or exit the vessel body, for connecting the pressure vessel with another device, for attaching instruments like gauges, etc.

Commonly, nozzles for pressure vessels can be provided as a so-called "set-in" nozzle or a so-called "set-on" nozzle. A set-in nozzle is provided inside a surface of the vessel body, wherein a diameter of an opening in the shell or head of the vessel body corresponds to an outside diameter of a neck of the nozzle. A set-in nozzle of that kind can be welded to the vessel body e.g. by means of a double-bevel-groove or K-groove, e.g. with a first bevel-groove weld at an inner surface and with a second bevel-groove weld on an outer surface of the shell or head. A set-on nozzle is provided on the surface of the vessel body, wherein the diameter of the opening in the shell or head corresponds to an inside diameter of the neck of the nozzle. A set-on nozzle of that kind can be welded to the vessel body e.g. by means of a V-shaped groove on the surface of the shell or head, with the V-groove weld e.g. being provided on an outer surface of the shell or head. Set-on nozzles commonly require less amount of welding compared to set-in nozzles and can be inspected by volumetric non-destructive testing (NDT). An NDT of a set-in nozzles can oftentimes not possible. Set-in nozzles can require reinforcement or addition of filler material in order to adjust radii at an inside corner of the nozzle and to adjust a transition from the nozzle to the shell or head of the vessel body. Providing set-in nozzles of that kind might require higher effort than providing set-on nozzles, but might be more resilient with regard to stresses. Further, both set-in nozzles and set-on nozzles are commonly forged and might need machining, which might lead to long delivery times.

In contrast to that, the present invention allows to easily and specifically tailor properties of the nozzle unit for its use with the specific pressure vessel. The nozzle unit can easily be connected to the corresponding pressure vessel, either by additively manufacturing the nozzle unit directly onto the vessel body, or by additively manufacturing the nozzle unit such that little amount of welding is required for connecting the nozzle unit to the pressure vessel. Expediently, little or no reinforcement or addition of filler material is required for connecting the nozzle unit to the vessel body. Further, non-destructive testing of the nozzle unit is particularly possible. The nozzle unit is particularly resilient to loads and stresses during operation of the pressure vessel.

According to an embodiment, an optimisation process or at least one optimisation process or optimisation algorithm is performed in order to determine or predetermine at least one parameter or property of the nozzle unit. The nozzle unit is then manufactured by means of the additive manufacturing process according to the determined at least one parameter. An optimisation process or optimisation is in general to be understood as an analytical or numerical computational process for finding optimised parameters of a complex system, in particular minimised or maximised parameters. For this purpose, an optimisation problem can be formulated, wherein a solution space Ω, i.e., a set of possible solutions or variables *̅x̅*̅, and an objective function f are given. To solve this optimisation problem, a set of values of the variables or solutions *̅x̅*̅ ∈ Ω is sought such that *f*(*̅x̅*̅) satisfies a given criterion, for example, becomes maximum or minimum. Furthermore, boundary or constraint conditions can also be specified, where admissible solutions *̅x̅*̅ must satisfy these specified boundary conditions. In the present case, the corresponding parameters of the nozzle unit can be determined e.g. such that the nozzle unit can optimally be connected to the pressure vessel and/or such that the connected nozzle unit can optimally be operated. Therefore, the nozzle unit and its properties can expediently be designed for an optimal use with the specific kind of pressure vessel. The additive manufacturing process expediently allows to easily and effectively manufacture the nozzle unit with the correspondingly determined specifically optimised parameters. This way, custom-made nozzle units can individually be designed and manufactured.

According to an embodiment, geometric parameters are determined by means of the optimisation process like a form and/or topology of the entire nozzle unit, radii of different sections of the nozzle unit, a wall thickness of different sections of the nozzle unit etc. Alternatively or additionally, chemical properties can be determined by means of the optimisation process like a composition of the manufacturing material etc. Expediently, the entire, specific form, geometry and/or chemical composition of the nozzle unit can be determined such that the nozzle unit can optimally be operated with the corresponding pressure vessel.

According to an embodiment, the optimisation process is performed in order to optimise, reduce or minimise a fatigue of the nozzle unit. For example, corresponding geometric parameters like radii and wall thickness can be determined such the nozzle unit can withstand loads and stresses throughout operation of the pressure vessel. For example, the geometry of the nozzle unit can be adjusted to a fatigue design, e.g. with bigger radii and a graded wall thickness in order to withstand increasing loads.

Alternatively or additionally, according to an embodiment, the optimisation process is performed in order to optimise, reduce or minimise a corrosion of the nozzle unit. For example, chemical parameters like the material composition of the nozzle unit can be determined such that the nozzle unit material is resilient against corrosion. Further, parameters of the nozzle unit can be determined such that liquids can easily run off or drain off the surface of the nozzle unit in order to avoid or minimise corrosion.

Alternatively or additionally, according to an embodiment, the optimisation process is performed in order to optimise, reduce or minimise an accumulation of liquid on a surface of the nozzle unit. For example, geometric parameters like the entire topology of the nozzle unit can be determined such that little or no accumulation of liquid can occur on the surface of the nozzle unit, especially on a surface section connected with or to be welded to the vessel body. This way, corrosion of the nozzle unit material can expediently be reduced, avoided or minimised.

According to an embodiment, performing the optimisation process comprises performing a topology optimisation process and/or a stress optimisation process. By means of the topology optimisation process, the topology and geometry of the nozzle unit can expediently be determined within a given design space, e.g. for given loads and stresses, e.g. such that little or no accumulation of liquids on the surface of the nozzle unit can occur. By means of the stress optimisation process, the topology and geometry of the nozzle unit can particularly be determined such that the nozzle unit can optimally withstand loads and stresses and such that fatigue of the nozzle unit material can be reduced or minimised. The topology optimisation and the stress optimisation can expediently be performed as a common optimisation process or e.g. as two optimisation process in dependence of each other.

According to an embodiment, the nozzle unit manufactured by means of the additive manufacturing process is normalised. In the course of the is normalising step, the additively manufactured nozzle unit can e.g. be heated to a predetermined temperature and then be cooled again to ambient temperature. By means of this normalising step, mechanical properties of the nozzle unit material like hardness or ductility as well as resiliency against corrosion can be improved.

According to an embodiment, the nozzle unit comprises a connecting section and a neck section. The connecting section and the neck section can integrally be formed by means of the additive manufacturing process as one piece. The connecting section is configured to be connected with a vessel body of the pressure vessel. The connecting section can directly be manufactured onto an opening in the vessel body or the connecting section can be welded to the corresponding opening in the vessel body. Expediently, the connecting section can be designed and manufactured such that the nozzle unit can optimally be connected with the vessel body, e.g. such that little or no amount of welding is required, such that little or no reinforcement or addition of filler material is required, and such that the nozzle unit is resilient to loads and stresses during pressure vessel operation. The neck section can have a cylindrical or at least essentially cylindrical form and can e.g. be provided for allowing a fluid to enter and/or exit the vessel body, for connecting the pressure vessel with another device, for attaching instruments, etc. Expediently, the neck section can be designed and manufactured such that the corresponding operation can optimally be performed. The nozzle unit can comprise further sections, e.g. a flange section, e.g. for connecting the nozzle unit with a corresponding fluid supply or fluid pipe etc.

According to an embodiment, the nozzle unit further comprises a pipe section configured to guide a fluid flow to the neck section or away from the neck section. For example, the nozzle unit can therefore be manufactured with an integrated support pipe, e.g. for an adsorbent, as a one-piece part.

According to an embodiment, the nozzle unit is provided as a fluid inlet and/or a fluid outlet of the vessel body. For this purpose, the neck section can expediently be used for allowing a fluid flow to enter and/or exit the vessel body. The neck section or the entire nozzle unit can expediently be designed and manufactured in order to allow an optimal control of the corresponding fluid flow, to optimally withstand loads and stresses caused by the fluid flow, to reduce or minimise fatigue and corrosion effects, etc.

According to an embodiment, the additive manufacturing process comprises an arc direct energy deposition (arc-DED), also referred to as wire and arc additive manufacturing (WAAM). In the course of this arc-DED or WAAM process, the individual layers of the nozzle can be created using a consumable wire and an arc. For this purpose, welding torches, for example for gas shielded metal arc welding, e.g. for metal inert gas welding (MIG), metal active gas welding (MAG), or plasma welding, can be used, with an arc burning between the welding torch and the workpiece to be manufactured. The material is continuously fed in the form of a wire or strip and melted by the arc. During this process, molten droplets are formed which are transferred to the workpiece to be produced and firmly bonded to it. The material can be fed to the welding torch, for example, as a consumable wire electrode, with the arc burning between this wire electrode and the workpiece. It is also conceivable to supply the material in the form of an additional wire which is melted by the arc of the welding torch.

It is also possible to use alternative or additional additive manufacturing processes, e.g. wherein the individual layers of the nozzle unit can be created by applying the respective material for example in powder form or in the form of wires or strips, and subjecting it to a laser and/or electron beam. The material can be subjected in this way to a sintering or melting process, for example, in order to be solidified. After one layer has been created, the next layer can be created in an analogous manner. Such additive manufacturing processes can for example include selective laser sintering (SLS), selective laser melting (SLM), electron beam melting (EBM), stereolithography (SL) or fused filament fabrication (FFF).

Further advantages and developments of the invention are specified in the description and the associated drawings.

It goes without saying, that the features named above and still to be explained below can be used not only in the combination indicated respectively, but also in other combinations or in a stand-alone manner, without going beyond the scope of the present invention.

The invention is illustrated schematically in the drawings on the basis of exemplary embodiments and will be described in detail in the following with reference to the drawings.

### Description of drawings

- Fig. 1: schematically shows an embodiment of a pressure vessel manufactured according to an embodiment of a method of the present invention in a side view.
- Fig. 2: schematically shows a nozzle unit manufactured according to an embodiment of a method of the present invention in a perspective sectional view.

### Detailed description of the drawings

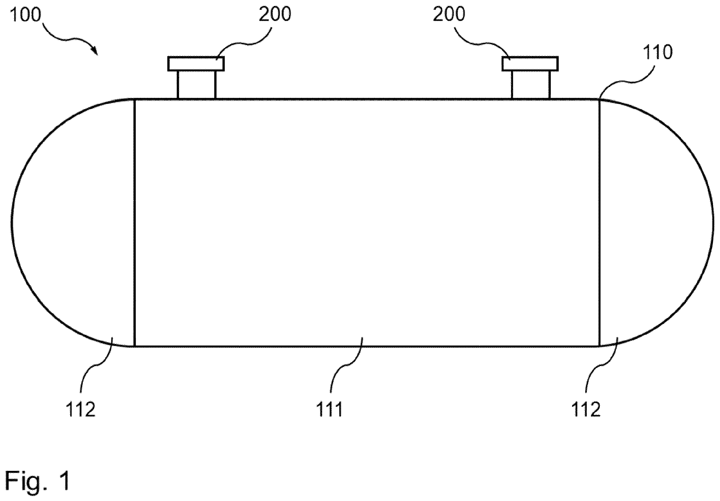

Fig. 1 shows an embodiment of a pressure vessel 100 in a schematic side view, e.g. a pressure vessel 100 for a pressure swing adsorption device. The pressure vessel 100 comprises a vessel body 110 with a shell 111 and two heads 112. The vessel body 110 is configured for creating and maintaining a corresponding pressure. The shell 111 can e.g. be made of different plates welded together to form a cylindrical shape. The curved heads 112 are provided for closing the shell 111 at opposite ends.

The pressure vessel 100 further comprises a number of nozzle units 200. These nozzle units 200 can e.g. be provided as an inlet and an outlet for allowing a fluid to enter and exit the vessel body 110. Although only two nozzle units 200 are shown in Fig. 1, it is to be understood that the pressure vessel 100 can also comprise a larger number of nozzle units, e.g. provided for attaching instruments like gauges, for connecting the pressure vessel 100 with another device, etc. It is further to be understood that the pressure vessel 100 can also comprise other elements, e.g. supports, carriers, etc.

According to an embodiment of the present invention, the nozzle units 200 are manufactured by means of an additive manufacturing process, i.e. wherein the corresponding nozzle unit 200 is created layer by layer by consecutively adding corresponding material, wherein a new layer of material is applied, solidified and firmly bonded to the underlying layers, e.g. with the aid of a laser, electron beam or electric arc. For example, the nozzle units 200 can be additively manufactured by means of an arc direct energy deposition (arc-DED), also referred to as wire and arc additive manufacturing (WAAM), wherein the individual layers are created by means of a consumable wire and an arc, e.g. using a welding torch for metal inert gas welding (MIG), metal active gas welding (MAG), or plasma welding, with an arc burning between the welding torch and the workpiece to be manufactured. The material is continuously fed in the form of a wire or strip and melted by the arc, wherein molten droplets are formed and transferred to the workpiece and firmly bonded to it. The material can be fed to the welding torch e.g. as a consumable wire electrode or in the form of an additional wire.

The nozzle units 200 as shown in Fig. 1 are connected to the shell 111 of the vessel body 110. However, it is also possible to correspondingly connect the nozzle units 200 with the head 112 of the vessel body 110. According to an embodiment of the present invention, the corresponding nozzle unit 200 can directly be additively manufactured onto the vessel body 110, particularly onto a corresponding opening in the surface of the vessel body 110. Alternatively, the corresponding nozzle unit 200 can also be manufactured in a separate additive manufacturing process and the correspondingly manufactured nozzle unit 200 can then be connected to the vessel body, expediently by welding the nozzle unit 200 to a corresponding opening in the surface of the vessel body 110.

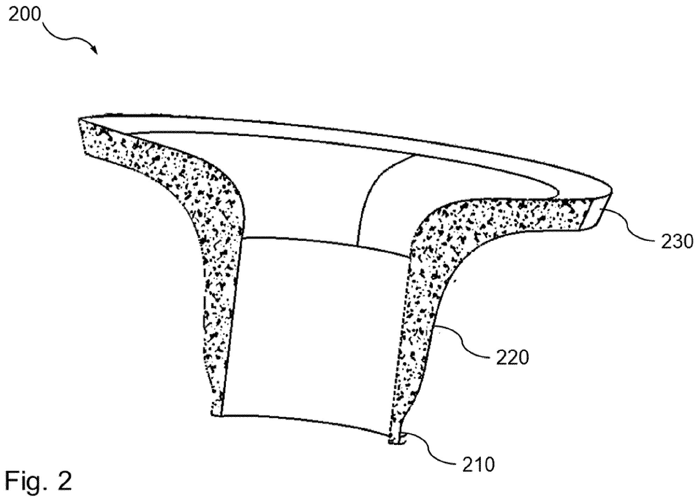

Fig. 2 schematically shows a corresponding nozzle unit 200 in a perspective sectional view. As shown in Fig. 2, the nozzle unit 200 comprises a connecting section 230, a neck section 220 and a flange section 210.

This connecting section 230 is configured to be connected with the vessel body 110, either by additively manufacturing the connecting section 230 directly onto the vessel body 110 or by welding the connecting section 230 to the vessel body 110. The neck section 220 can have a cylindrical form and can be provided for allowing the corresponding fluid to enter or exit the vessel body 110. The flange section 210 can be provided for connecting the nozzle unit 200 with a corresponding fluid supply or fluid pipe etc. The nozzle unit 200 with its connecting section 230, neck section 220 and flange section 210 can integrally be formed by means of the additive manufacturing process as one piece.

According to an embodiment of the present invention, an optimisation process is performed in order to determine parameters of the nozzle unit 200. The nozzle unit 200 is then additively manufactured according to these determined parameters. For example, these parameters can comprise the form and topology of the entire nozzle unit 200 and its different sections 210, 220, 230. These parameters can further comprise the radii, wall thickness and chemical composition of the different sections 210, 220, 230.

For example, a topology optimisation and a stress optimisation can be performed as the optimisation process, either as two individual processes in dependence of each other or as a common optimisation process. For example, the optimisation process is performed in order to optimise, reduce or minimise fatigue and corrosion of the nozzle unit 200 and to optimise, reduce or minimise accumulation of liquid on a surface of the nozzle unit 200. For example, the radii, wall thickness and material composition of the different sections 210, 220, 230 can be determined such the nozzle unit 200 can withstand loads and stresses throughout operation of the pressure vessel. The form and topology of the different sections 210, 220, 230 e.g. can be determined to a fatigue design, e.g. with bigger radii and a graded wall thickness in order to withstand increasing loads. Further, form and topology of the nozzle unit 200 can be determined such that little or no accumulation of liquid can occur on the surface of the nozzle unit 200, such that corrosion of the nozzle unit material can be reduced, avoided or minimised.

After the additive manufacturing process, the nozzle unit 200 can be normalised, e.g. by heating the nozzle unit 200 to a predetermined temperature and by afterwards cooling the nozzle unit 200 to ambient temperature. Mechanical properties of the nozzle unit 200 like hardness or ductility as well as resiliency against corrosion can therefore be improved.

The present invention allows to manufacture the nozzle unit 200 in an easy, cost effective and time effective manner, such that effort, manufacturing time and delivery time can be reduced. Properties of the nozzle unit 200 can easily and specifically be tailored for its use with the specific pressure vessel 100 and the nozzle unit 200 can be manufactured to meet specific requirements e.g. regarding fatigue, corrosion or temperature. The additive manufacturing process further allows to manufacture an individually designed, custom-made nozzle unit 200, also in small quantities or even as a single-item production.

## Claims

1. A method for manufacturing a nozzle unit (200) for a pressure vessel (100), especially for a pressure vessel of a pressure swing adsorption device, comprising the step of:
manufacturing the nozzle unit (200) by means of an additive manufacturing process.

2. The method according to claim 1, further comprising:
performing an optimisation process in order to determine at least one parameter of the nozzle unit (200); and
manufacturing the nozzle unit (200) by means of the additive manufacturing process according to the determined at least one parameter.

3. The method according to claim 2, wherein one or several of the following parameters are determined by means of the optimisation process:
a form of the nozzle unit (200); and/or
a topology of the nozzle unit (200); and/or
a radius of a section (210, 220, 230) of the nozzle unit (200); and/or
a wall thickness of a section (210, 220, 230) of the nozzle unit (200); and/or
a composition of a material of the nozzle unit (200).

4. The method according to claim 2 or 3, wherein the optimisation process is performed in order to optimise fatigue of the nozzle unit (200) and/or in order to optimise corrosion of the nozzle unit (200) and/or in order to optimise an accumulation of liquid on a surface of the nozzle unit (200).

5. The method according to any one of the claims 2 to 4, wherein performing the optimisation process comprises performing a topology optimisation process and/or a stress optimisation process.

6. The method according to any one of the preceding claims, further comprising normalising the nozzle unit (200) manufactured by means of the additive manufacturing process.

7. The method according to any one of the preceding claims, wherein the nozzle unit (200) comprises a neck section (220) and a connecting section (230), wherein the connecting section (230) is configured to be connected with a vessel body (110) of the pressure vessel (100).

8. The method according claim 7, wherein the nozzle unit (200) further comprises a pipe section configured to guide a fluid flow to the neck section (220) or away from the neck section (220).

9. The method according to any one of the preceding claims, wherein the additive manufacturing process comprises an arc direct energy deposition.

10. The method according to any one of the preceding claims, further comprising:
additively manufacturing the nozzle unit (200) onto a vessel body (110) of the pressure vessel (100); or
connecting the nozzle unit (200) to the vessel body (110) of the pressure vessel (100), especially welding the nozzle unit (200) to the vessel body (110).

11. A nozzle unit (200) for a pressure vessel (100), especially for a pressure vessel (100) of a pressure swing adsorption device, manufactured according to a method of any one of the preceding claims.

12. A method for manufacturing a pressure vessel (100), especially a pressure vessel (100) for a pressure swing adsorption device, comprising the steps of:
providing a vessel body (110); and
manufacturing a nozzle unit (200) according to a method of any one of claims 1 to 10 onto the vessel body (110); or
manufacturing a nozzle unit (200) according to a method of any one of claims 1 to 10 and connecting the nozzle unit (200) to the vessel body (110).

13. The method according to claim 12, wherein the nozzle unit (200) is provided as a fluid inlet and/or a fluid outlet of the vessel body (110).

14. A pressure vessel (100), especially a pressure vessel (100) of a pressure swing adsorption device, manufactured according to a method of any one of the claims 12 or 13.
